# DEMANDE DE BREVET EUROPEEN

(11) **EP 4 810 378 A1**
(43) Date de publication de la demande: **23.09.2026**
(21) Numéro de dépôt: 26166182.1
(22) Date de dépôt: 19.03.2026
(51) Int. Cl.: B64D 27/40, B64D 29/06

(54) **ENSEMBLE PROPULSIF POUR AERONEF**

(30) Priorité: 20.03.2025 FR 2502863
(71) Demandeur: Airbus Operations S.A.S., 31060 Toulouse (FR)
(72) Inventeur: JOLIVET, Nicolas, 31060 TOULOUSE Cedex 9 (FR); PAUTIS, Olivier, 31060 TOULOUSE Cedex 9 (FR); GRIMAL, Fabrice, 31060 TOULOUSE Cedex 9 (FR); GUENEAU, Germain, 31060 TOULOUSE Cedex 9 (FR); COMBES, Pierre-Antoine, 31060 TOULOUSE Cedex 9 (FR); DE NICOLA, Marc, 31060 TOULOUSE Cedex 9 (FR)
(74) Mandataire: Airbus-OPS SAS

(57) **Abrégé**

La présente invention porte sur un ensemble propulsif comprenant un moteur (22) s'étendant autour d'un axe longitudinal X comportant un carter arrière (24) et des attaches destinés à le fixer à un mât (16) dont une attache moteur arrière comprenant une ferrure (40) au moins partiellement enveloppante. L'ensemble propulsif comprend des dispositifs de maintien du moteur (48) entre le carter (24) et la ferrure (40) comportant une partie au moins partiellement flexible (56) fixée au carter arrière (24) ou à la ferrure (40) et une partie rigide (52) en contact avec la partie au moins partiellement flexible (56) fixée inversement à la ferrure (40) ou au carter arrière (24).

## Description

La présente invention concerne le domaine des ensembles propulsifs d'aéronef comprenant un moteur, en particulier un turboréacteur à double flux, ainsi qu'un dispositif de maintien du moteur sous la voilure de l'aéronef. Elle concerne également un aéronef muni d'un tel ensemble propulsif.

La demande de brevet française FR2414105 déposée par Airbus Operations SAS le 13 décembre 2024 décrit un système de propulsion comprenant un turboréacteur, un mât d'accrochage et des moyens de fixation du turboréacteur au mât d'accrochage ainsi que des biellettes.

La présente invention vise à apporter une solution alternative.

A cet effet, la présente invention concerne un ensemble propulsif comprenant un moteur s'étendant autour d'un axe longitudinal X comportant un carter arrière et des attaches destinés à le fixer à un mât dont une attache moteur arrière comprenant une ferrure au moins partiellement enveloppante autour du carter arrière, caractérisé en ce qu'il comprend des dispositifs de maintien du moteur entre le carter et la ferrure comportant une partie au moins partiellement flexible fixée au carter arrière ou à la ferrure et une partie rigide en contact avec la partie au moins partiellement flexible fixée inversement à la ferrure ou au carter arrière.

L'invention prévoit au moins l'une des caractéristiques optionnelles suivantes, prises isolément ou en combinaison.

La partie rigide comprend une semelle fait d'un matériau d'usure s'étendant sur la portion de la partie rigide susceptible d'être en contact avec la partie au moins partiellement flexible lorsque le moteur fonctionne ainsi qu'à l'arrêt.

La semelle est fixée sur la partie rigide de manière démontable.

La partie au moins partiellement flexible comporte un élément rigide et un élément flexible, l'élément flexible étant lié à l'élément rigide et se trouvant entre l'élément rigide et la partie rigide et en contact avec cette dernière.

La ferrure est semi-enveloppante et au moins trois dispositifs de maintien sont prévus, deux transversaux et un vertical, la partie rigide et la partie au moins partiellement flexible du dispositif de maintien vertical étant fixée l'une à l'autre.

La ferrure est complètement enveloppante et au moins quatre dispositifs de maintien sont prévus, deux transversaux et deux verticaux, les parties rigides et flexibles de chacun d'entre eux étant en contact.

La ferrure est complètement enveloppante et des dispositifs de maintien adjacents sont prévus sur toute la circonférence de la ferrure dans un même plan transversal.

La partie rigide et la partie au moins partiellement flexible en contact sont en contact en au moins un point.

L'élément flexible est un ressort dont l'une des extrémités est en contact avec la partie rigide.

La partie au moins partiellement flexible est une lame courbe sans changement de direction à un seul point de changement de direction dont les deux extrémités sont destinées à être fixées au carter ou à la ferrure voire à l'élément rigide.

La présente invention concerne également un aéronef comportant un ensemble propulsif présentant au moins l'une des caractéristiques optionnelles précédentes, prises isolément ou en combinaison.

D'autres buts, caractéristiques et avantages ressortiront de la description de l'invention qui va suivre, description donnée à titre d'exemple uniquement non limitatif, en référence aux dessins ci-annexés dans lesquels :
[Fig. 1] est une vue latérale simplifiée d'un aéronef en vol comprenant un ensemble propulsif selon la présente invention ;
[Fig. 2] est une vue en perspective d'une forme de réalisation d'un ensemble propulsif selon la présente invention ;
[Fig. 3a] est une vue schématique d'un élément flexible du dispositif de maintien du moteur selon la présente invention ;
[Fig. 3b] est une vue schématique d'une autre forme de réalisation de l'élément flexible du dispositif de maintien du moteur selon la présente invention ;
[Fig. 3c] est une vue schématique d'une autre forme de réalisation de l'élément flexible du dispositif de maintien du moteur selon la présente invention ;
[Fig. 4] est une vue schématique en coupe transversale d'un ensemble propulsif fixé à un mât et pourvu d'un dispositif de maintien selon une première forme de réalisation ;
[Fig. 5] est une vue schématique en coupe transversale d'un ensemble propulsif fixé à un mât et pourvu d'un dispositif de maintien selon une deuxième forme de réalisation ;
[Fig. 6] est une vue schématique en coupe transversale d'un ensemble propulsif fixé à un mât et pourvu d'un dispositif de maintien selon une troisième forme de réalisation ;
[Fig. 7] est une vue schématique en coupe transversale d'un ensemble propulsif fixé à un mât et pourvu d'un dispositif de maintien selon une quatrième forme de réalisation ;
[Fig. 8] est une vue schématique en coupe transversale d'un ensemble propulsif fixé à un mât et pourvu d'un dispositif de maintien selon une cinquième forme de réalisation ;
[Fig. 9] est une vue schématique en coupe transversale d'un ensemble propulsif fixé à un mât et pourvu d'un dispositif de maintien selon une sixième forme de réalisation ;
[Fig. 10] est une vue schématique en coupe transversale d'un ensemble propulsif fixé à un mât et pourvu d'un dispositif de maintien selon une septième forme de réalisation ;
[Fig. 11] est une vue schématique en coupe transversale d'un ensemble propulsif fixé à un mât et pourvu d'un dispositif de maintien selon une huitième forme de réalisation.

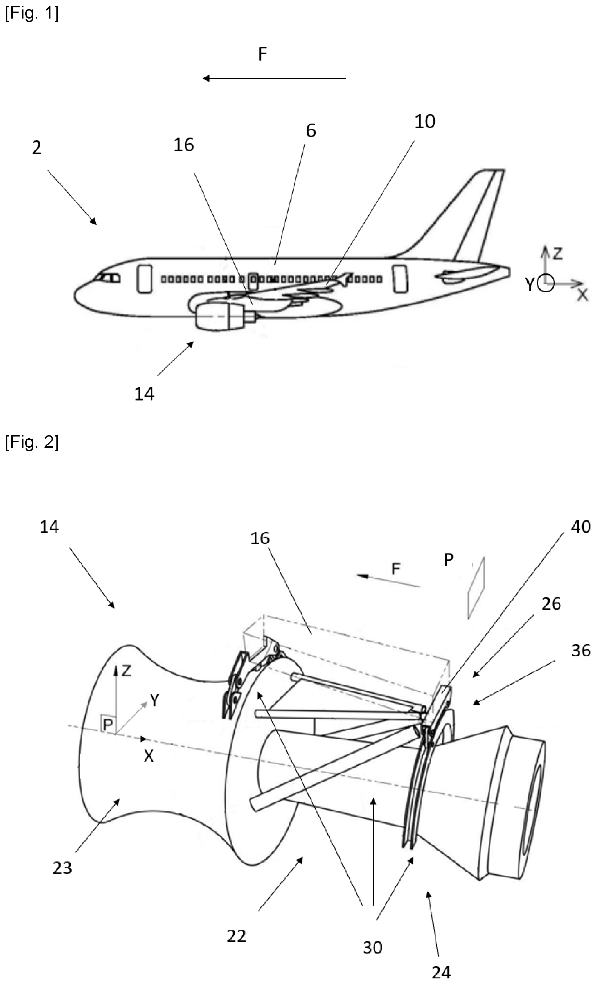

Comme représenté sur les figures 1 et 2, la présente invention se rapporte à un aéronef 2 comprenant un fuselage 6 et une voilure 10. Au moins un ensemble propulsif 14 est fixé sous la voilure 10 par l'intermédiaire d'un mât 16. L'ensemble propulsif 14 comprend un moteur 22 ainsi qu'éventuellement une nacelle et un ensemble d'éléments de fixation 26 du moteur 22 au mât 16. Le moteur thermique 22 peut être par exemple de type turboréacteur et plus précisément peut être pris pour exemple un turboréacteur à double flux (en langue anglo saxonne turbofan) ou encore de type moteur à soufflante non carénée. Le moteur 22 comprend un carter avant 23 et un carter arrière 24 fixé à l'arrière du carter avant et dans lequel des éléments du moteur sont logés comme des étages de compression, une chambre de combustion, des étages de turbine et un cône d'éjection. Le carter avant 23 est par exemple un carter de soufflante dans lequel est montée une soufflante, il peut également s'agir du carter qui est juste à l'arrière de la soufflante dans le cas d'un turboréacteur à soufflante non carénée.

Par convention, on appelle X l'axe longitudinal du moteur, l'axe X étant parallèle à l'axe de rotation de la motorisation. On appelle Z l'axe vertical, l'axe Z étant vertical lorsque l'aéronef est posé sur le sol. On appelle Y l'axe transversal au turboréacteur, les axes X et Y étant perpendiculaires et parallèles au sol quand l'aéronef est posé sur le sol. Les trois axes X, Y et Z sont orthogonaux entre eux. Les termes « avant » et « arrière » doivent être considérés en relation avec la direction d'avancement de l'aéronef lors du fonctionnement du turboréacteur, cette direction étant représentée schématiquement par la flèche F sur la figure 1.

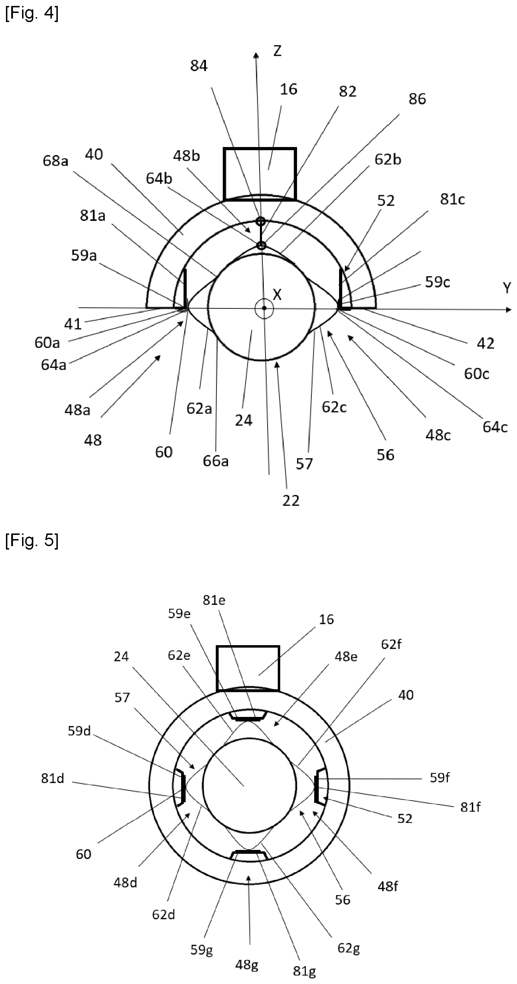

Les éléments de fixation 26 comprennent plusieurs attaches 30 dont une attache moteur arrière 36 comportant une ferrure 40 fixée au mât 16 ou faisant partie intégrante de celui-ci. La ferrure 40 peut être réalisée d'une seule ou de plusieurs pièces fixées et/ou articulées les unes aux autres. La ferrure 40 enveloppe au moins partiellement le carter 24 arrière du moteur à distance de celui-ci. Dans les différentes formes de réalisation illustrées, dans un plan P transversal YZ, la distance dans une direction radiale entre le carter 24 du moteur et la ferrure 40 est sensiblement la même sur toute l'étendue de la ferrure. Dans les formes de réalisation des figures 4, 6, 8 et 9, la ferrure 40 présente une forme globale s'étendant dans un plan YZ sur une partie seulement de la périphérie du carter 24 du moteur, et est appelée dans ce cas ferrure semi-enveloppante. Dit autrement, la ferrure semi-enveloppante entoure partiellement le carter du moteur. La ferrure présente une forme courbe en U renversé présentant deux extrémités libres 41, 42. Dans les formes de réalisation des figures 5, 7, 10 et 11, la ferrure 40 entoure dans un plan YZ complètement le carter 24 du moteur, sur la totalité de sa périphérie et est appelée dans ce cas, ferrure enveloppante. Les autres éléments de fixation ne sont pas décrits dans la présente demande. Ils peuvent présenter de multiples formes connues de l'homme du métier. On s'intéresse ici uniquement à l'attache 36 moteur arrière.

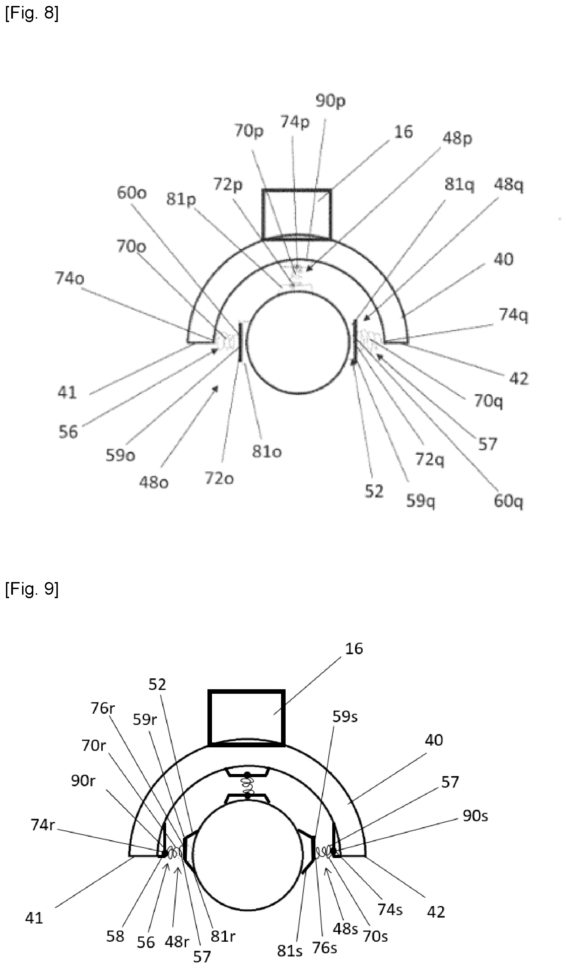

Comme illustré sur les figures, l'ensemble propulsif 14 comprend des dispositifs 48 de maintien du moteur dans un plan transversal YZ. Le dispositif de maintien 48 comprend deux parties 52, 56 : une partie rigide 52 sous la forme d'un bloc (plein, creux, rempli d'un ou plusieurs matériaux ou de toute autre forme possible) de tout type de forme adaptée, ou d'une bielle rigide de tout type de forme adaptée fixée à la ferrure 40 ou au carter 24 du moteur, et une partie au moins partiellement flexible 56 sous la forme d'un élément flexible 57 et par exemple d'une lame déformable, ressort, pièce flexible de toute forme adaptée ou encore d'une combinaison (voir par exemple la forme de réalisation de la figure 9) de cet élément 57 flexible en liaison avec un élément 58 rigide sous la forme d'un bloc rigide (plein, creux, rempli d'un ou plusieurs matériaux ou de toute autre forme possible) de tout type de forme adaptée, cette partie au moins partiellement flexible étant fixée au carter 24 du moteur ou à la ferrure 40, à l'inverse de la partie rigide 52 en vis-à-vis de celle-ci. Pour permettre de différencier l'élément rigide 58 de la partie au moins partiellement flexible 56 de la partie rigide 52 lorsqu'ils se présentent tous les deux sous la forme d'un bloc, dans les formes de réalisation proposant un élément rigide, cet élément rigide 58 sera appelé socle et la partie rigide 52 sera appelé bloc sachant que pour l'un comme pour l'autre tout type de forme de bloc approprié est possible et peut être différente sur une même forme de réalisation. La partie rigide 52 comprend une semelle 59 s'étendant au moins sur toute la surface susceptible d'être en contact avec une extrémité de la partie au moins partiellement flexible 56 lorsque le moteur est à l'arrêt mais également en fonctionnement. La semelle 59 est faite d'un matériau d'usure à savoir un matériau apte à se dégrader sous l'action des frottements exercés par la partie au moins partiellement flexible. La semelle 59 est démontable de manière à pouvoir être facilement remplacée. Elle peut être par exemple prévue clipsée ou vissée. Lorsque la partie au moins partiellement flexible 56 est composée d'un élément rigide 58 et d'un élément flexible 57, l'élément flexible 57 doit se retrouver entre l'élément rigide 58 et la partie rigide 52. La partie au moins partiellement flexible 56 est en contact en un point 60 avec la partie rigide 52, appelé point de contact, mais il se peut que pour une partie des dispositifs de maintien, elles soient fixées l'une à l'autre comme il sera vu plus loin. Dans l'ensemble des formes de réalisation illustrées, dans un plan transversal YZ, les deux parties flexibles et rigides sont en contact en un point mais il pourrait être prévu plusieurs points de contact voire même une surface complète entre celles-ci. Au moins trois dispositifs 48 de maintien sont prévus, deux dont leurs points de contact lorsque le moteur est à l'arrêt sont sur une ligne confondue avec l'axe Y ou parallèle à celui-ci de part et d'autre du carter, appelés dispositifs transversaux et un dans une direction Z verticale, appelé dispositif vertical supérieur dont le point de contact lorsque le moteur est à l'arrêt se trouve dans un plan de symétrie XZ du moteur, à équidistance des dispositifs transversaux. Les parties au moins partiellement flexibles 56 (élément flexible et éventuellement élément rigide) et rigides 52 de ces dispositifs sont respectivement qualifiées de partie transversale ou verticale suivant le cas. Dans le cas où n'y a pas de dispositif de maintien vertical diamétralement opposé au dispositif vertical supérieur de l'autre côté du carter, la partie rigide et la partie au moins partiellement flexible du dispositif de maintien vertical sont fixées l'une à l'autre. Dans le cas d'une ferrure enveloppant complètement le carter, quatre dispositifs de maintien sont prévus dont deux dispositifs 48 verticaux dans la direction verticale Z de part et d'autre du carter : dans ce cas, les points de contact des deux dispositifs verticaux sont sur une ligne confondue avec l'axe Z ou parallèle à celui-ci lorsque le moteur est à l'arrêt. Il pourrait être prévu plus de quatre dispositifs de maintien comme il sera vu plus loin et dans des positions différentes de celles illustrées. Dans le cas où à chaque dispositif de maintien correspond un autre diamétralement opposés de part et d'autre du carter, la partie au moins partiellement flexible et la partie rigide sont en contact et la partie flexible peut glisser sur la partie rigide et plus précisément sur sa semelle.

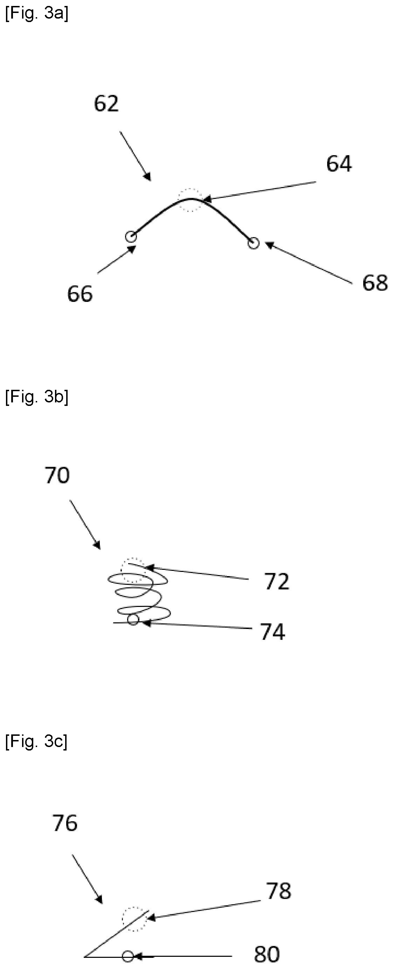

Comme montré sur les figures 3a, 3b et 3c, l'élément flexible 57 de la partie au moins partiellement flexible peut se présenter sous diverses formes. Les figures 3a à 3c en présentent des exemples. Selon la figure 3a, il s'agit d'une lame 62 courbe sans changement de concavité à un seul point 64 de changement de direction dont les deux extrémités 66, 68 sont destinées à être fixées au carter ou à la ferrure voire dans certains cas à l'élément rigide 58. Le point de changement de direction 64 est destiné à former le point de contact 60 avec la partie rigide 52. Selon la figure 3b, il s'agit d'un ressort 70 dont l'une des extrémités 72 est libre destinée à être en contact avec la partie rigide 52 et dont l'autre extrémité 74 est destinée à être fixée au carter ou à la ferrure voire comme vu plus haut à l'élément rigide 58. Selon la figure 3c, il s'agit d'un élément flexible 76 d'une forme spécifique ici en v dont l'une des extrémités 78 est libre et l'autre 80 destinée à être fixée au carter ou à la ferrure voire à l'élément rigide 58. Comme vu plus haut, il se peut également que le point 64, 72, 78 en contact avec la partie rigide 52 soit fixée à celle-ci.

Dans la description qui suit, seront décrits des exemples de combinaisons de formes possibles de parties au moins partiellement flexibles 56 et rigides 52. Les éléments identiques ou équivalents (équivalents car exerçant la même fonction mais pas tout à fait avec la même forme du fait de passer par exemple d'une ferrure semi-enveloppante à une ferrure enveloppante) garderont les mêmes références instanciées a,b,c ... pour les distinguer lorsque nécessaire d'une forme de réalisation à l'autre.

Selon la forme de réalisation de la figure 4 portant sur une ferrure semi-enveloppante, la partie au moins partiellement flexible 56 des trois dispositifs de maintien 48a, 48b, 48c se trouve ici complètement flexible et constituée d'un élément 57 flexible qui se présente sous la forme d'une lame 62a, 62b, 62c dont les extrémités (seules les extrémités 66a, 68a de la lame 62a sont référencées sur la figure 4 pour alléger la figure) sont fixées sur le carter 24. Dans la forme illustrée, la lame verticale 62b (au plus haut verticalement) se trouve à équidistance des lames transversales 62a, 62c. La partie rigide 52 se présente ici sous la forme d'un bloc 81a, 81c pour les parties rigides transversales et d'une bielle 82 pour la partie rigide verticale. La partie rigide peut être par exemple métallique. Dans le cas du dispositif de maintien 48b vertical, l'une des extrémités 84 de la bielle 82 est fixée à la ferrure 40 et l'autre extrémité 86 est fixée à la lame au niveau de son point 64b de changement de direction. Dans le cas des dispositifs de maintien 48a, 48c transversaux, les blocs 81a, 81c et les lames 62a, 62c sont positionnés et fixés par tout type de moyen connu respectivement à la ferrure 40 et au carter 24 de manière que la lame 62a, 62c en son point de changement de direction 64a, 64c soit en contact (point de contact 60) avec le bloc 81a, 81c en vis-à-vis radialement ; les points de contact 60a, 60c lorsque le moteur est à l'arrêt se trouvent sur une ligne confondue avec l'axe Y. Le bloc et la lame présentent un positionnement et une forme tels que le bloc est en contact en un point, en l'espèce le point 64a, 64c de changement de direction de la lame associée (à savoir en vis-à-vis). Le bloc 81a, 81c comporte une semelle 59a, 59c sur laquelle la lame 62a, 62c peut se déplacer lors du fonctionnement du moteur.

Selon la forme de réalisation de la figure 5, la ferrure 40 est enveloppante. Quatre dispositifs de maintien 48d, 48e, 48f, 48g sont prévus : deux dispositifs verticaux 48e, 48g et deux dispositifs transversaux 48d, 48f. La partie au moins partiellement flexible 56 des quatre dispositifs de maintien 48d, 48e, 48f, 48g se trouve ici complètement flexible et constituée d'un élément 57 flexible qui se présente sous la forme d'une lame 62d, 62e, 62f, 62g dont les extrémités sont fixées sur le carter 24. Les lames 62d, 62e, 62f, 62g se trouvent à équidistance l'une de l'autre. La partie rigide 52 se présente ici sous la forme d'un bloc 81d, 81e, 81f, 81g fixé par tout type de moyen connu à la ferrure 40 de manière que la lame 62d, 62e, 62f, 62g en son point de changement de direction soit en contact (point de contact 60) avec le bloc 81d, 81e, 81f, 81g en vis-à-vis radialement. La partie rigide peut être par exemple métallique. Le bloc et la lame présentent un positionnement et une forme tels que le bloc est en contact en un point, en l'espèce le point de changement de direction de la lame associée (à savoir en vis-à-vis). Le bloc 81d, 81e, 81f, 81g comporte une semelle 59d, 59e, 59f, 59g sur laquelle la lame 62d, 62e, 62f, 62g peut se déplacer lors du fonctionnement du moteur.

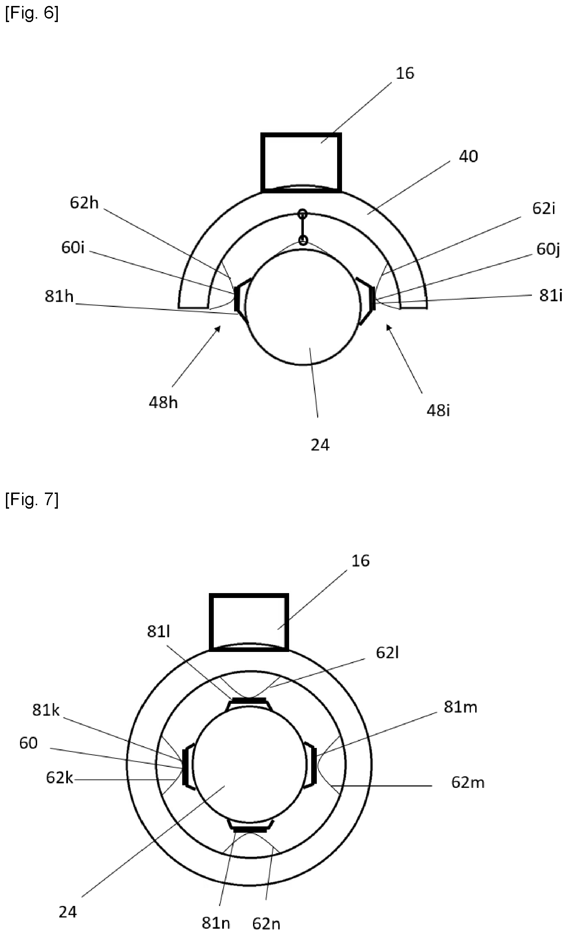

Selon la forme de réalisation de la figure 6 portant sur une ferrure semi-enveloppante, la configuration est exactement la même que celle de la figure 4 à l'exception des dispositifs 48h, 48i de maintien transversaux pour lesquels les lames 62h, 62i et les blocs 81h, 81i sont fixés respectivement à la ferrure 40 et au carter arrière 24 soit à l'inverse de la forme de réalisation de la figure 4. Les points de contact 60h, 60i entre les lames 62h, 62i et les blocs 81h, 81i avec moteur à l'arrêt sont sur une ligne parallèle à la direction de l'axe Y.

Selon la forme de réalisation de la figure 7 portant sur une ferrure enveloppante, la configuration est exactement la même que celle de la figure 5 à la différence près que les lames 62k, 62l, 62m, 62n et blocs 81k, 811, 81m, 81n des dispositifs 48k, 48l, 48m, 48n de maintien sont fixés respectivement à la ferrure 40 et au carter arrière 24, à savoir à l'inverse de la forme de réalisation de la figure 7.

Selon la forme de réalisation de la figure 8 portant sur une ferrure semi-enveloppante, trois dispositifs de maintien 48o, 48p, 48q sont prévus : deux transversaux 48o, 48q et un vertical 48p. Les parties au moins partiellement flexibles 56 des dispositifs transversaux 48o, 48q se trouvent ici complètement flexibles et constituées d'un élément 57 flexible qui se présente sous la forme d'un ressort 70o, 70q. L'une des extrémités 74o, 74q du ressort 70o, 70q est fixée à la ferrure 40 au niveau de l'une de ses extrémités respectivement 41, 42. L'autre extrémité du ressort 72o, 72q est en contact en un point (point de contact 60) avec la partie rigide 52 à savoir ici un bloc respectivement 81o, 81q. Dans la forme illustrée, la partie au moins partiellement flexible 56 du dispositif vertical 48p comprend un élément 57 flexible sous la forme d'un ressort 70p et un élément rigide 58 sous la forme d'un socle 90p. Le ressort 70p est fixé par l'une de ses extrémités 74p au socle 90p et par l'autre extrémité 72p au bloc 81p. Les blocs et ressorts des dispositifs de maintien transversaux 48o, 48q sont positionnés et fixés par tout type de moyen connu de manière que l'une des extrémités 72o, 72q du ressort soit en contact en un point 60o, 60q (point de contact 60) avec le bloc 81o, 81q en vis-à-vis radialement ; les points de contact 60o, 60q des dispositifs transversaux lorsque le moteur est à l'arrêt se trouvent sur une ligne confondue avec l'axe Y. Les blocs 81o, 81q comprennent une semelle respectivement 59o, 59q sur laquelle l'extrémité libre du ressort 72o, 72q peut se déplacer lors du fonctionnement du moteur.

Selon la forme de réalisation de la figure 9 portant sur une ferrure semi-enveloppante, la configuration est la même que celle de la figure 8 à la différence près que les dispositifs 48r, 48s au moins partiellement flexibles transversaux comprennent un élément rigide 58 sous la forme d'un socle 90r, 90s fixé à la ferrure 40 et plus précisément au niveau des extrémités 41, 42 libres de celle-ci. L'élément flexible 57 sous la forme d'un ressort 70r, 70s est fixé à l'une de ses extrémités 74r, 74s au socle 90r, 90s et à l'autre 76r, 76s à la partie rigide 52 sous forme d'un bloc 81r, 81s pourvu d'une semelle 59r, 59s.

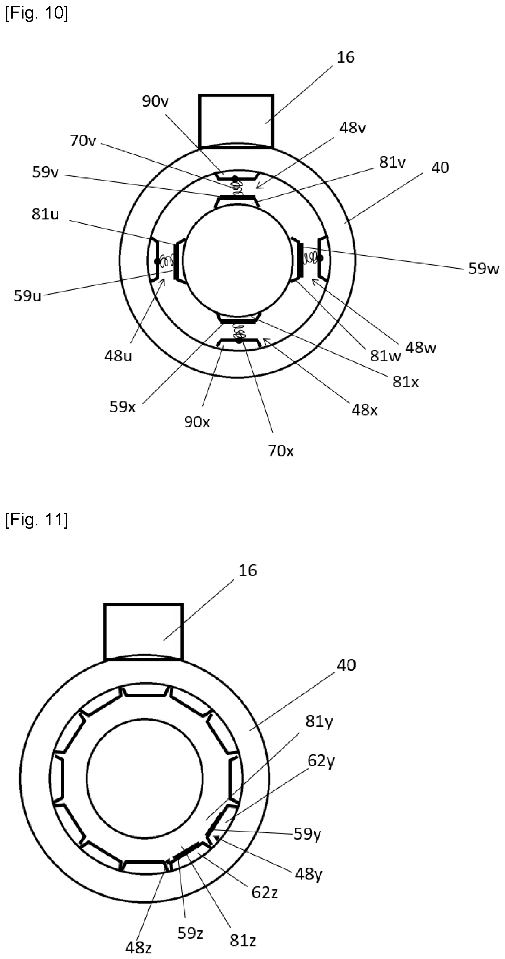

Selon la forme de réalisation de la figure 10 portant sur une ferrure 40 enveloppante, la configuration est la même que celle de la figure 9 à l'exception des dispositifs de maintien 48v, 48x verticaux supérieur 48v et inférieur 48x du fait de la forme enveloppante de la ferrure. Les dispositifs de maintien verticaux 48v, 48x comprennent, comme les dispositifs de maintien transversaux 48u, 48w, une partie au moins partiellement flexible composé d'un élément flexible sous la forme d'un ressort 70v, 70x fixé à un élément rigide sous la forme d'un socle 90v, 90x et une partie rigide sous la forme d'un bloc 81v, 81x pourvu d'une semelle 59v, 59x. Les blocs et ressorts des dispositifs de maintien présentent un positionnement et une forme tels que l'une des extrémités du ressort est en contact en un point (point de contact 60) avec le bloc en vis-à-vis radialement. Les points de contact des dispositifs transversaux lorsque le moteur est à l'arrêt se trouvent sur une ligne confondue avec l'axe Y. Les points de contact des dispositifs verticaux lorsque le moteur est à l'arrêt se trouvent sur une ligne confondue avec l'axe Z. Les blocs 81u, 81v, 81w, 81x comprennent une semelle respectivement 59u, 59v, 59w, 59x sur laquelle l'extrémité libre du ressort peut se déplacer lors du fonctionnement du moteur.

Selon la forme de réalisation de la figure 11 portant sur une ferrure enveloppante, des dispositifs de maintien 48y, 48z ... adjacents sont prévus sur toute la circonférence de la ferrure dans un même plan transversal YZ. Des blocs 81y, 81z ...sont fixés de manière contiguës sur toute la circonférence de la ferrure et des lames 62y, 62z... sont fixés de manière contiguës sur toute la circonférence du carter de manière à former des paires blocs/lames en vis-à-vis en contact sur une surface de glissement et plus précisément pour les blocs au niveau de semelles 59y, 59z prévues sur les blocs ...(seules les semelles 59y, 59z sont représentées). Comme pour les autres configurations, les lames pourraient être prévues sur la ferrure et les blocs sur le carter.

## Revendications

1. Ensemble propulsif comprenant un moteur (22) s'étendant autour d'un axe longitudinal X, comportant un carter arrière (24) et des attaches (30) destinés à le fixer à un mât (16) dont une attache moteur arrière (36) comprenant une ferrure (40) au moins partiellement enveloppante autour du carter arrière, **caractérisé en ce qu'**il comprend des dispositifs de maintien du moteur (48) entre le carter (24) et la ferrure (40) comportant une partie au moins partiellement flexible (56) fixée au carter arrière (24) ou à la ferrure (40) et une partie rigide (52) en contact avec la partie au moins partiellement flexible (56) fixée inversement à la ferrure (40) ou au carter arrière (24), la dite partie au moins partiellement flexible (56) étant une lame courbe sans changement de concavité à un seul point (64) de changement de direction dont les deux extrémités (66, 68) sont destinées à être fixées au carter (24) ou à la ferrure (40) voire dans certains cas à l'élément rigide (58).

2. Ensemble propulsif selon la revendication 1 **caractérisé en ce que** la partie rigide (52) comprend une semelle (59) fait d'un matériau d'usure s'étendant sur la portion de la partie rigide susceptible d'être en contact avec la partie au moins partiellement flexible lorsque le moteur fonctionne ainsi qu'à l'arrêt.

3. Ensemble selon la revendication 2, caractérisé en que la semelle (59) est fixée sur la partie rigide (52) de manière démontable.

4. Ensemble selon l'une des revendications 1 à 3, **caractérisé en ce que** la partie au moins partiellement flexible comporte un élément rigide (58) et un élément flexible (57), l'élément flexible étant lié à l'élément rigide et se trouvant entre l'élément rigide (58) et la partie rigide (52) et en contact avec cette dernière.

5. Ensemble selon l'une des revendications 1 à 4, **caractérisé en ce que** la ferrure (40) est semi-enveloppante et au moins trois dispositifs (48) de maintien sont prévus, deux transversaux et un vertical, la partie rigide (52) et la partie au moins partiellement flexible (56) du dispositif de maintien vertical étant fixée l'une à l'autre.

6. Ensemble selon l'une des revendications 1 à 5, **caractérisé en ce que** la ferrure (40) est complètement enveloppante et au moins quatre dispositifs (48) de maintien sont prévus, deux transversaux et deux verticaux, les parties rigides et flexibles de chacun d'entre eux étant en contact.

7. Ensemble selon l'une des revendications 1 à 6, **caractérisé en ce que** la ferrure (40) est complètement enveloppante et des dispositifs de maintien (48) adjacents sont prévus sur toute la circonférence de la ferrure dans un même plan transversal.

8. Ensemble selon l'une des revendications 1 à 7, **caractérisé en ce que** la partie rigide (52) et la partie au moins partiellement flexible (56) en contact sont en contact en au moins un point.

9. Ensemble selon la revendication 8, **caractérisé en ce que** le point de changement de direction est destiné à former le point de contact (60) avec la partie rigide (52).

10. Aéronef comportant un ensemble propulsif selon l'une des revendications 1 à 10.
